# EUROPEAN PATENT APPLICATION

(11) **EP 3 933 361 A1**
(43) Date of publication of application: **05.01.2022**
(21) Application number: 20182836.5
(22) Date of filing: 29.06.2020
(51) Int. Cl.: G01K 1/02, G01K 1/14, G01K 1/16, H01R 13/66

(54) **ARRANGEMENT AND METHOD FOR MEASURING TEMPERATURE OF CABLE CONNECTION TERMINAL OF ELECTRIC DRIVE**

(71) Applicant: ABB Schweiz AG, 5400 Baden (CH)
(72) Inventor: MÄNNISTÖ, Pasi, 00380 Helsinki (FI)
(74) Representative: Kolster Oy Ab

(57) **Abstract**

A measuring arrangement and method for measuring a temperature of a cable connection terminal of an electric drive, the measuring arrangement (100) comprising measuring means (110, 120) configured to measure the temperature of the cable connection terminal (200) of the electric drive, the measuring means (110, 120) comprising at least one temperature sensor configured to be thermally connected to the cable connection terminal (200) of the electric drive; and transmitting means configured to transmit the measured temperature from the measuring arrangement (100).

## Description

### FIELD

The present invention relates to an arrangement and a method for measuring a temperature of a cable connection terminal of an electric drive.

### BACKGROUND

An electric drive generally refers to an electronic apparatus, which may be used to regulate the performance of an electric motor or another kind of load, for example. An electric drive may control the power, frequency and/or current supplied to the load, for instance. An electric drive and e.g. an electric motor controlled by the electric drive may form an electric drive system. An electric drive may comprise one or more electric power converter units or modules, such as rectifiers, inverters or frequency converters, for example.

The electric drive may comprise cable connection terminals for connecting various input and/or output cables such as input power cables supplying power to the electric drive and output power cables supplying power from the electric drive to the load, such as a motor, for example.

If the connection of the cable to the cable connection terminal is loose or otherwise defective, the temperature of the cable connection terminal may rise and/or vary abnormally. Thus, e.g. condition monitoring of the cable connections to the cable connection terminals of the electric drive may be done by measuring the temperatures of the cable connection terminals. This may be performed by using e.g. an infrared thermometer which enables to measure the temperature without touching the cable connection terminal possibly under tension.

A problem related to the above solution is that the cable connection terminals of the electric drive may be located inside the housing of the electric drive possibly behind other components and/or the electric drive may be located in a difficult to reach location. Then, in order to measure the temperature e.g. with an infrared thermometer, which requires a physical view to the measured object, the measuring could be complicated and time consuming.

### BRIEF DESCRIPTION

An object of the present invention is thus to provide a method and an apparatus for implementing the method so as to overcome the above problems or at least to alleviate them. The objects of the invention are achieved by a measuring arrangement, and a method, which are characterized by what is stated in the independent claims. The preferred embodiments of the invention are disclosed in the dependent claims.

The invention is based on the idea of thermally connecting a temperature sensor to a cable connection terminal of the electric drive, measuring the temperature of the cable connection terminal by the temperature sensor connected to the cable connection terminal, and transmitting the measured temperature.

An advantage of the solution of the invention is that it enables the monitoring of the temperature of the cable connection terminal to be performed remotely.

### BRIEF DESCRIPTION OF THE DRAWINGS

In the following the invention will be described in greater detail by means of exemplary embodiments with reference to the accompanying drawings, in which
Figure 1 illustrates a measuring arrangement according to an embodiment;
Figure 2 illustrates a measuring arrangement according to an embodiment;
Figure 3 illustrates a block diagram according to an embodiment;
Figure 4 illustrates an electric drive according to an embodiment; and
Figure 5 illustrates a block diagram according to an embodiment.

### DETAILED DESCRIPTION

The following embodiments are exemplary. Although the description may refer to "an", "one", or "some" embodiment(s) in several locations, this does not necessarily mean that each such reference is to the same embodiment(s), or that the feature only applies to a single embodiment, for example. Single features of different embodiments may also be combined to provide other embodiments. Generally, all terms and expressions used should be interpreted broadly and they are intended to illustrate, not to restrict, the embodiments. The figures only show components necessary for understanding the various embodiments. The number and/or shape of the various elements, and generally their implementation, could vary from the examples shown in the figures.

According to an embodiment, a measuring arrangement for measuring a temperature of a cable connection terminal of an electric drive, comprises measuring means configured to measure the temperature of the cable connection terminal, the measuring means comprising at least one temperature sensor configured to be thermally connected to the cable connection terminal of the electric drive, and transmitting means configured to transmit the measured temperature from the measuring arrangement. According to an embodiment, a method for measuring a temperature of a cable connection terminal of an electric drive, comprises thermally connecting a temperature sensor of a measuring arrangement to the cable connection terminal of the electric drive, measuring the temperature of the cable connection terminal by the temperature sensor of the measuring arrangement thermally connected to the cable connection terminal, and transmitting the measured temperature from the measuring arrangement to a temperature monitoring entity. Term 'electric drive' herein generally refers to an electronic apparatus, which may be used to regulate the performance of an electric motor or another load. An electric drive may control the power, frequency and/or current supplied to the motor, for instance. An electric drive and an electric motor controlled by the electric drive may form an electric drive system. An electric drive may comprise one or more electric power converter units or modules, such as rectifiers, inverters or frequency converters, for example. Herein term 'inverter' generally refers to an electronic device or circuitry that is able to convert direct current to alternating current. An example of the inverter is a semiconductor bridge implemented by means of controllable semiconductor switches, such as IGBTs (Insulated-Gate Bipolar Transistor) or FETs (Field-Effect Transistor), which are controlled according to a modulation or control scheme used.

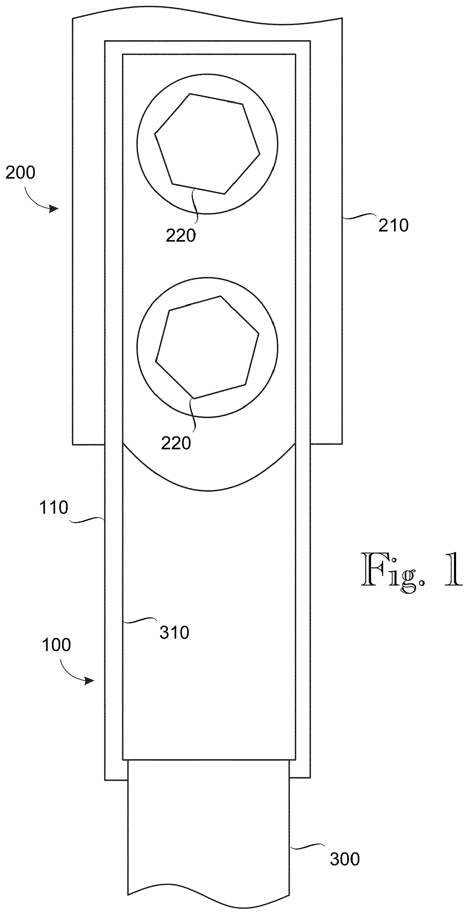

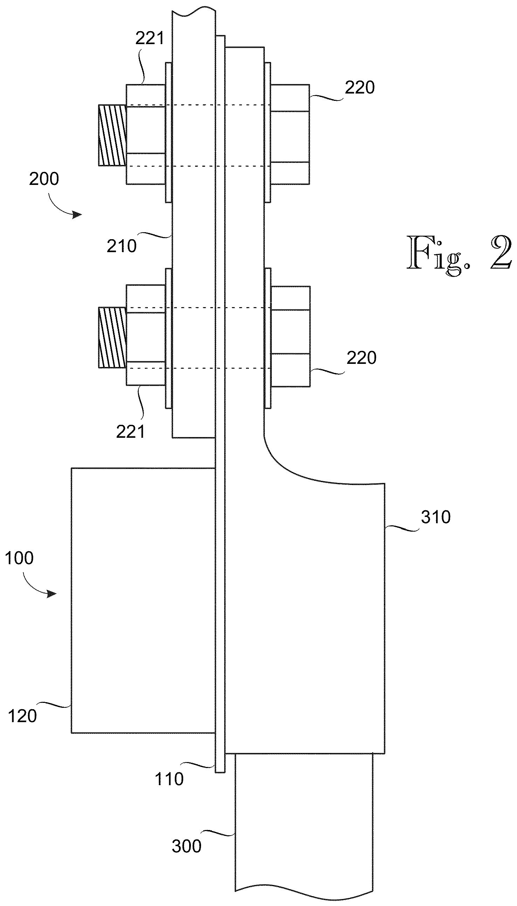

Figures 1 and 2 show an example of a measuring arrangement 100 according to an embodiment. The exemplary measuring arrangement 100 is connected to a cable connection terminal 200 of an electric drive. The exemplary cable connection terminal 200 comprises an electrical connecting part 210, such as a busbar, or a part thereof, or a similar electric conductor structure, and suitable fastening means comprising e.g. one or more bolts 220 and nuts 221 for clamping or fastening a cable 300 to the cable connection terminal 200. The structure of the cable connection terminal 200 may vary from the example shown and may depend e.g. on the voltage level and/or current level of the electrical connection in question. The cable connection terminal may be an input power cable connection terminal or an output power cable connection terminal of the electric drive, for example. The cable 300 in the illustrated examples is provided with a cable shoe (a cable lug) 310 to assist the connection of the cable 300 end to the cable connection terminal 200. However, depending on the structure of the cable connection terminal 200 and/or of the cable 300, such a cable shoe 310 may not be needed and the cable 300 end could be directly connected to the cable connection terminal 200.

In the example illustrated in Figures 1 and 2 the measuring arrangement 100 comprises a connection part 110 and a measuring unit 120 housing other elements of the exemplary measuring arrangement 100. There could also be more than one such connection parts 110, connected in parallel and/or in series with each other, for connecting the measuring arrangement 100 to the cable connection terminal 200. According to an embodiment, the measuring arrangement 100 comprises thermal connection means configured to thermally indirectly connect the at least one temperature sensor to the cable connection terminal of the electric drive via the thermal connection means. Accordingly, the at least one connection part 110 may function as such thermal connection means and provide at least a thermal connection between the cable connection terminal 200 and the measuring unit 120. For this purpose, the at least one connection part 110 may be made of thermally conducting material, such as metal material. The exemplary at least one connection part 110 may also physically fasten the measuring arrangement 100 to the cable connection terminal 200 such that no further fastening of the measuring arrangement 100 is needed. Alternatively, the measuring arrangement 100, or some part or parts thereof, could be physically fastened to another part within the electric drive such that mainly a thermal connection between the measuring arrangement 100 and the cable connection terminal 200 is provided, for example. Such one or more connection parts 110 providing the thermal connection and/or physical fastening of the measuring arrangement 100 is preferably suitably shaped such that it can be connected to the cable connection terminal 200 without interfering the functioning of the cable connection terminal 200. In the example of Figures 1 and 2 the at least one connection part 110 comprises, at least partly, a sheet-like structure, which can be sandwiched between the cable connection terminal 200 and the end of the cable 300 connected to the connection terminal 200. As a result, the connection part 110 may accurately convey the actual temperature in the cable connection terminal 200 to the measuring unit 120. The thickness of such a sheet-like structure can be suitably selected such that it is thin enough to fit to the cable connection terminal 200 but at the same time thick enough to provide adequate physical fastening of the measuring arrangement 100 to the cable connection terminal 200, for example. The sheet-like structure of the connection part 110 may also comprise one or more holes for possible fastening bolts 220 or screws, for instance, as also shown in the example of Figures 1 and 2 to further facilitate the fastening of the measuring arrangement 100 to the cable connection terminal 200.

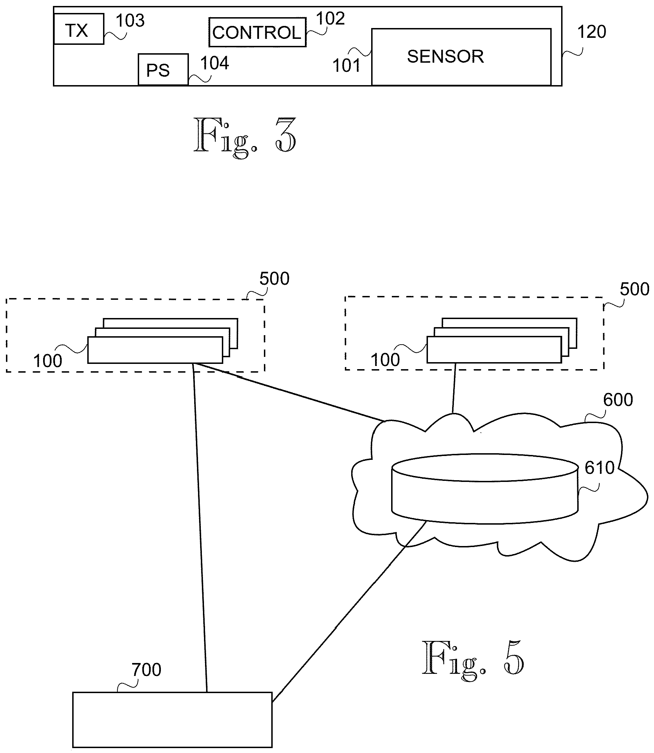

Figure 3 shows a simplified block diagram of the exemplary measuring unit 120. It should be noted that instead of one such measuring unit 120 or a similar entity, the elements and functionality thereof, as described in the following, could be distribute between two or more physically and/or logically separate units or entities within the measuring arrangement 100. According to an embodiment, the measuring arrangement 100 comprises measuring means configured to measure the temperature of the cable connection terminal 200 of the electric drive. Such measuring means may comprise at least one temperature sensor 101 configured to be thermally connected to the cable connection terminal 200 of the electric drive. The at least one temperature sensor 101 may be housed within the exemplary measuring unit 120 as shown in the example. According to an embodiment, the at least one temperature sensor 101 may be configured to be thermally directly connected to the cable connection terminal 200 of the electric drive. Accordingly, the at least one temperature sensor 101 could be directly connected to the cable connection terminal 200 hence providing a direct thermal connection. According to an embodiment, the at least one temperature sensor 101 may be configured to be thermally indirectly connected to the cable connection terminal 200 of the electric drive. Such indirect thermal connection may be provided via one or more intermediate parts 110 of thermally conducting material providing the thermal connection between the at least one temperature sensor 101 and the cable connection terminal 200 of the electric drive, as shown in the example of Figures 1 and 2. In the example of Figures 1 and 2 the temperature sensor 101 may be arranged in direct thermal connection to the at least one connection part 110. There could also be one or more electrically insulating but thermally conducting layers (not shown in the figures) provided between the temperature sensor and the at least one connection part 110, for example. The type of the at least one temperature sensor 101 may be selected according to characteristics of the electrical connection provided by the cable connection terminal 200 of the electric drive, for example. The at least one temperature sensor 101 may be an electrical temperature sensor, such as a thermistor, a thermocouple, a resistance thermometer, a silicon bandgap temperature sensor, or any combination thereof, or an integrated circuit sensor, for example. According to an embodiment, the measuring means of the measuring arrangement 100 may further comprise a control arrangement 102, which is configured to measure the temperature of the cable connection terminal 200 by the at least one temperature sensor 101 thermally connected to the cable connection terminal. The control arrangement 201 may also provide other functionalities within the measuring arrangement 100 according to any one of the embodiments described herein. According to an embodiment, the measuring arrangement 100 may comprise transmitting means configured to transmit the measured temperature from the measuring arrangement. Accordingly, the exemplary measuring unit 120 comprises a transmitter (TX) 103, which may be a wireless transmitter or a wired transmitter, or a combination thereof, and which is configured to send the measured temperature data from the measuring arrangement 100. Also a combined (wireless and/or wired) transmitter-receiver, i.e. a transceiver, could be used, which could enable the measuring arrangement 100 to receive control and/or other data, for example. Such a wireless transmitter or transceiver could utilize Bluetooth, Wi-Fi, cellular and/or a low-power wide-area network (LPWAN) technology, for example, or any other wireless communication technology. Such a wired transmitter or transceiver could utilize Ethernet technology, such as any Industrial Ethernet (IE) protocol, for example. The exemplary measuring unit 120 further comprises a power supply (PS) 104, which may provide the operating power for the measuring arrangement 100. According to an embodiment, the measuring arrangement 100 comprises power supplying means configured to transfer electric power from the cable connection terminal 200 or from an electric circuit connected to the cable connection terminal to the measuring arrangement by means of inductive coupling and/or capacitive coupling. Accordingly, the power supply 104 of the exemplary measuring unit 120 could be configured to provide such wireless transfer of electric power by means of inductive coupling and/or capacitive coupling from the cable connection terminal 200 or from an electric circuit connected to the cable connection terminal to the measuring arrangement, such as the cable 300. For this purpose, the power supply 104 may comprise (not shown separately) a suitable coupling device(s), such as a coil(s), electrode(s) and/or antenna(s) for obtaining electric power wirelessly from the cable connection terminal 200 or from an electric circuit connected thereto. Additionally or alternatively, the power supply 104 of the exemplary measuring unit 120 may comprise one or more batteries, for instance. The measuring arrangement 100 could further comprise, e.g. within the control arrangement 102, a memory, such as a buffer memory, for at least temporarily storing e.g. measurement data.

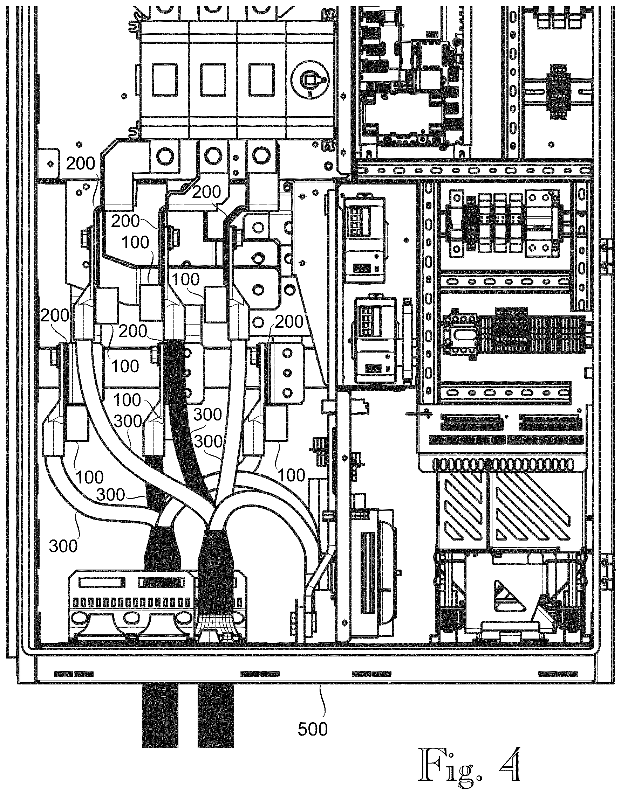

Figure 4 illustrates an electric drive 500 according to an embodiment. In the example six cable connection terminal 200 connected to six cables 300, respectively, are each equipped with a separate measuring arrangement 100 for measuring the temperature of the respective cable connection terminal. The exemplary cables 300 in the example of Figure 4 could be three input power phase cables and three output power phase cables of the electric drive, for example. It should be noted that only some cable terminals 200 of an electric drive 500, or all of them, could be equipped with measuring arrangements 100. Moreover, it is also possible that one measuring arrangement comprises two or more temperature sensors and is configured to measure the temperature of two or more different cable connection terminals of the electric drive 500.

According to an embodiment, the measuring arrangement 100 may be configured to perform the measuring and transmitting of the temperature of the cable connection terminal 200 of the electric drive continuously or at predetermined intervals. According to an embodiment, the measured temperature is transmitting from the measuring arrangement to a temperature monitoring entity. Such a temperature monitoring entity may be any kind of physical or logical arrangement or system performing temperature monitoring of the electric drive in question, for example.

Figure 5 illustrates a simplified block diagram of a monitoring system according to an embodiment. The connections shown in Figure 5 are logical connections and the actual physical connections may be different. In the example two electric drives 500 are illustrated each of which may comprise a plurality of measuring arrangements 100 according to any one of the embodiments described herein. The example further shows a temperature monitoring arrangement (e.g. apparatus, device, equipment) 700, which is configured to obtain the temperature information transmitted by at least one of the at least one measuring arrangements 100. The temperature monitoring arrangement 700 may be located on a remote site. As shown in the example, the temperature information may be transmitted from the at least one of the at least one measuring arrangements 100 to the temperature monitoring arrangement 700 directly and/or indirectly via one or more further elements. The communication connections may utilize a fixed communication system or a wireless communication system or a communication system utilizing both fixed networks and wireless networks, for example. Figure 5 also illustrates a cloud platform 600, for example, in which network devices, computing devices and/or storage devices may provide shared resources, such as a database 610 for storing process data such as temperature data. Such a cloud platform 600 may be based on The Internet of Things (loT), which refers to the networking of physical devices (also referred to as 'connected devices' and 'smart devices'), such as vehicles, home appliances, machines, computers and other items that are embedded with electronics, software, sensors, actuators, and network connectivity that enables these objects to collect and exchange data. IoT allows objects to be sensed and/or controlled remotely across existing network infrastructure. The Industrial Internet of Things (IIoT) is the use of loT technologies in e.g. the manufacturing industry. It may incorporate machine learning and big data technology, harnessing the sensor data, machine-to-machine communication and automation technologies that have existed in industrial settings. IIoT also provides mechanisms to connect industrial devices to a cloud computing platform and to transfer information to the cloud platform for performing various operations, such as remote monitoring, e.g. for predictive maintenance, on the industrial data. It is apparent to a person skilled in the art that such systems also comprise other equipment, functional entities and structures, some of which may be used in or for big data, data management, and communication in the system or in one part of the system. They, as well as the possible protocols used, are considered known by persons skilled in the art. Therefore, they need not to be discussed in more detail herein. Accordingly, the temperature data transmitted from one measuring arrangements 100 could be stored to a database 610, managed by any suitable database management system, within the cloud platform 600, from where the one or more temperature monitoring arrangements 700 may obtain the data, for example. The temperature monitoring arrangement 700 may comprise a condition monitoring tool configured, for example, to identify in one or more condition parameters, such as temperature, changes indicative of a developing fault. Thus, the condition of the cable connection terminals 200 can be monitored even remotely on the basis of the measured temperatures thereof. Another example of such a monitoring tool includes a possibly remote performance optimization tool, for example, to identify sources of issues indicative of e.g. increased energy consumption, and/or increased emissions. The purpose and actual functionality of the temperature monitoring arrangement 700 and its internal structure may vary and may depend on the system architecture and characteristics, for example.

According to an embodiment, a condition monitoring of the cable connection terminal 200 of the electric drive 500, performed e.g. by the temperature monitoring arrangement 700 and/or by another entity, may be based on a trend analysis of the measured temperature data. According to an embodiment, such condition monitoring may comprise collecting, over a period of time, a set of values of the measured temperature of the cable connection terminal 200 of the electric drive 500 transmitted from the measuring arrangement 100 to the temperature monitoring entity 70, and forming a temperature trend pattern on the basis of the collected set of values of the measured temperature. Such a trend pattern may be a trend line, e.g. a linear trend line or a non-linear trend line, or a trend curve, for example. Moreover, such a trend pattern can be formed by using any known method. Then, a condition of the cable connection terminal 200 of the electric drive 500 can be determined on the basis of the formed temperature trend pattern. Such determination may comprise e.g. comparing the formed temperature trend pattern to one or more predetermined threshold values and/or patterns, which may be determined on the basis of an expected temperature, historical temperature data and/or calculations. Such calculations may be based on e.g. current and/or voltage values of the cable connection terminal 200, or any quantities in known relationship thereto, for example.

The control arrangement 102 or other means controlling the one or more measuring arrangements 100, or one or more elements thereof, and/or the temperature monitoring arrangement 700, according to any one of the embodiments described herein, or any combination thereof, may be implemented as one physical unit or as two or more separate physical units that are configured to implement the functionality of the various embodiments. Any apparatus for implementing the functionality according to any one of the embodiments may be implemented at least partly by means of one or more computers or corresponding digital signal processing (DSP) equipment provided with suitable software, for example. Such a computer or digital signal processing equipment preferably comprises at least a working memory (RAM) providing storage area for arithmetical operations and a central processing unit (CPU), such as a general-purpose digital signal processor. The CPU may comprise a set of registers, an arithmetic logic unit, and a CPU control unit. The CPU control unit is controlled by a sequence of program instructions transferred to the CPU from the RAM. The CPU control unit may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The computer may also have an operating system, which may provide system services to a computer program written with the program instructions. The computer or other apparatus implementing any of the embodiments, or a part thereof, may further comprise suitable input means for receiving e.g. measurement and/or control data, and output means for outputting e.g. control data. It is also possible to use a specific integrated circuit or circuits, such as application-specific integrated circuits (ASIC), and/or programmable logic devices (PLD), such as a field-programmable gate array (FPGA), and/or discrete electric components and devices for implementing the functionality according to any one of the embodiments.

If at least part of the functionality of any of the embodiments is implemented by software, such software or program may be provided as a computer program product comprising computer program code which, when run on a computer, causes the computer or corresponding computing device to perform the functionality according to the embodiment. Such a computer program code may be stored or generally embodied on a computer readable medium, such as suitable memory, e.g. a flash memory or an optical memory, from which it is loadable to the unit or units executing the program code. In addition, such a computer program code implementing the embodiment may be loaded to the unit or units executing the computer program code via a suitable data network, for example, and it may replace or update a possibly existing program code.

It will be obvious to a person skilled in the art that, as the technology advances, the inventive concept can be implemented in various ways. The invention and its embodiments are not limited to the examples described above but may vary within the scope of the claims.

## Claims

1. A measuring arrangement for measuring a temperature of a cable connection terminal of an electric drive, comprising:
measuring means (110, 120) configured to measure the temperature of the cable connection terminal (200) of the electric drive (500), the measuring means comprising at least one temperature sensor (101) configured to be thermally connected to the cable connection terminal (200) of the electric drive (500); and
transmitting means (103) configured to transmit the measured temperature from the measuring arrangement (100).

2. A measuring arrangement as claimed in claim 1, wherein the measuring arrangement (100) is configured to perform the measuring and transmitting continuously or at predetermined intervals.

3. A measuring arrangement as claimed in claim 1 or 2, wherein the transmitting means (103) are configured to transmit the measured temperature in a wireless and/or wired manner.

4. A measuring arrangement as claimed in claim 1, 2 or 3, wherein the at least one temperature sensor (101) is configured to be thermally directly connected to the cable connection terminal (200) of the electric drive (500).

5. A measuring arrangement as claimed in claim 1, 2 or 3, comprising thermal connection means (110) configured to thermally indirectly connect the at least one temperature sensor (101) to the cable connection terminal (200) of the electric drive (500) via the thermal connection means (110).

6. A measuring arrangement as claimed in any one of claims 1 to 5, comprising power supplying means (104) configured to transfer electric power from the cable connection terminal (200) or from an electric circuit connected to the cable connection terminal (200) to the measuring arrangement (100) by means of inductive coupling and/or capacitive coupling.

7. An electric drive, comprising:
at least one cable connection terminal (200); and
at least one measuring arrangement (100) as claimed in any one of claims 1 to 6, wherein the at least one temperature sensor (101) of the measuring arrangement (100) is thermally connected to the cable connection terminal (200) of the electric drive (500).

8. A monitoring system, comprising:
at least one measuring arrangement (100) as claimed in any one of claims 1 to 6; and
at least one temperature monitoring arrangement (700) configured to obtain the temperature information transmitted by at least one of the at least one measuring arrangements (100).

9. A monitoring system as claimed in claim 8, comprising:
at least one database (610) configured to receive temperature information transmitted by the at least one measuring arrangement (100),
wherein the at least one temperature monitoring arrangement (700) is configured to obtain the temperature information from the at least one database (610).

10. A method for measuring a temperature of a cable connection terminal (200) of an electric drive (500), comprising:
thermally connecting a temperature sensor (101) of a measuring arrangement (100) to the cable connection terminal (200) of the electric drive (500);
measuring the temperature of the cable connection terminal (200) by the temperature sensor (101) of the measuring arrangement (100) thermally connected to the cable connection terminal (200); and
transmitting the measured temperature from the measuring arrangement (100) to a temperature monitoring entity (700).

11. A method as claimed in claim 10, wherein the measuring is performed continuously or at predetermined intervals.

12. A method as claimed in claim 10 or 11, wherein the measured temperature is transmitted from the measuring arrangement (100) to the temperature monitoring entity (700) in a wireless and/or wired manner.

13. A method as claimed in claim 10, 11 or 12, wherein the temperature sensor (101) of the measuring arrangement (100) is thermally directly connected to the cable connection terminal (200) of the electric drive (500) or thermally indirectly connected to the cable connection terminal (200) of the electric drive (500).

14. A method as claimed in any one of claims 10 to 13, comprising transferring electric power from the cable connection terminal (200) or from an electric circuit connected to the cable connection terminal (200) to the measuring arrangement (100) by means of inductive coupling and/or capacitive coupling.

15. A method as claimed in any one of claims 10 to 14, comprising:
collecting, over a period of time, a set of values of the measured temperature of the cable connection terminal (200) of the electric drive (500) transmitted from the measuring arrangement (100) to the temperature monitoring entity (700);
forming a temperature trend pattern on the basis of the collected set of values of the measured temperature; and
determining, on the basis of the formed temperature trend pattern, a condition of the cable connection terminal (200) of the electric drive (500).
